(19) Europäisches Patentamt
European Patent Office
Office européen des brevets

(11)  EP 3 318 838 B1

(12)  **EUROPÄISCHE PATENTSCHRIFT**

(45) Veröffentlichungstag und Bekanntmachung des Hinweises auf die Patenterteilung:
**29.01.2020  Patentblatt 2020/05**

(51) Int Cl.:
*G01B 11/24* (2006.01)      *G01C 11/00* (2006.01)

(21) Anmeldenummer: **16197746.7**

(22) Anmeldetag: **08.11.2016**

(54) **3D-SCANVORRICHTUNG UND VERFAHREN ZUM DREIDIMENSIONALEN SCANNEN VON OBJEKTEN**

3D SCANNING DEVICE AND METHOD FOR THE THREE-DIMENSIONAL SCANNING OF OBJECTS

DISPOSITIF SCANNER 3D ET PROCÉDÉ DE BALAYAGE TRIDIMENSIONNEL D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.05.2018  Patentblatt 2018/19**

(73) Patentinhaber: **botspot GmbH**
**12459 Berlin (DE)**

(72) Erfinder:
• **Frank, Markus**
**12459 Berlin (DE)**
• **Ostermeier, Manfred**
**12457 Berlin (DE)**
• **Strenger, Thomas**
**12459 Berlin (DE)**
• **Hoffmann, Matthias**
**12459 Berlin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**GB-A- 2 535 742     US-A1- 2015 304 629**

• **Stephen Se ET AL: "Passive 3D Imaging" In: "3D Imaging, Analysis and Applications", 1. Januar 2012 (2012-01-01), Springer London, London, XP055158913, ISBN: 978-1-44-714063-4 Seiten 35-94, DOI: 10.1007/978-1-4471-4063-4_2, * Seite 35 - Seite 39 * * Seite 80 - Seite 88 ***

**Beschreibung**

Die vorliegende Erfindung betrifft eine dreidimensionale Scanvorrichtung zur bildlichen Erfassung dreidimensionaler Objekte sowie ein Verfahren zum dreidimensionalen Scannen von Objekten.

Stand der Technik

Das Arbeiten in 3D tritt in der heutigen Zeit immer mehr in den Vordergrund. Neben dem bekannten 3D-Drucker und den Virtual-Reality-Brillen ist das 3D-Scannen eins der wichtigsten Verfahren. Für das 3D-Scannen gibt es mehrere mögliche Sensortypen, wie Laser und Kamera. GB 2 535 741 A offenbart einen 3D Scanner bei dem Kameras auf das zu scannende Objekt ausgerichtet werden. US 2015/0304629 A1 offenbart ein System zur Stereophotogrammetrie zur Erzeugung von einzelnen 3D-Bildern.

Das 3D-Scannen wird auch in Zukunft einen wachsenden Stellenwert in der Gesellschaft einnehmen. So werden heutige 2D-Technologien wie Fernsehen, Computer, Navigationssysteme und viele andere immer mehr in Richtung der 3-dimensionalen Darstellung gehen. Fußballspiele werden in der Zukunft in 3D ausgestrahlt, so dass der Zuschauer sich Situationen aus mehreren unterschiedlichen, selbstgewählten Perspektiven ansehen kann. Hierzu müssen die Spiele nicht mehr mit herkömmlichen Fernsehkameras aufgenommen werden, sondern mit hochspezialisierten 3D-Scannern. In Boutiquen wird man sich 3D-Scannen lassen können und virtuell Kleidungsstücke anprobieren, welche in Echtzeit originalgetreu am eigenen Avatar dargestellt werden.

Die Kenntnis über die besten Kameraeinstellungen, -anordnungen und -anzahl ist hierfür unverzichtbar. Dabei bedarf es aber verbesserter Verfahren und Kenntnisse über den gesamten Entstehungsprozess eines 3D-Scans, um diese Technologie günstiger und in besserer Qualität einer breiteren Masse an Menschen zur Verfügung stellen zu können.

Offenbarung der Erfindung

Erfindungsgemäß wird eine 3D-Scanvorrichtung vorgeschlagen, die eine Mehrzahl von miteinander über Verbindungselemente verbundenen Bildaufnahmemodulen aufweist, wobei die Verbindungselemente zusammen mit den Bildaufnahmemodulen einen Scanbereich der 3D-Scanvorrichtung umgeben. Jedes Bildaufnahmemodul umfasst dabei eine Mehrzahl von vertikal übereinander angeordneten Bildaufnahmevorrichtungen. Jede Bildaufnahmevorrichtung umfasst mehrere auf einer horizontalen Achse angeordnete optische Sensoren, eine Stelleinrichtung, die dazu ausgebildet ist, den Neigungswinkel der optischen Sensoren zu variieren, und einen Sensorcontroller zur Steuerung der Stelleinrichtung und zur Einstellung und Auslösung der Bildaufnahme der optischen Sensoren. Ferner weist die 3D-Scanvorrichtung eine Steuerungs- und Auswerteeinrichtung zur Steuerung und Auswertung der Bilder der Bildaufnahmevorrichtungen auf, wobei die Steuerungs- und Auswertvorrichtung dazu eingerichtet ist, jede Bildaufnahmevorrichtung separat und individuell anzusteuern und den Neigungswinkel ihrer optischen Sensoren auszurichten. Ferner ist die Steuerungs- und Auswerteeinrichtung zum vertikalen Scannen eines Objektes durch sequentielles Ändern des Neigungswinkels der optischen Sensoren der Bildaufnahmevorrichtungen eingerichtet, und die 3-D Scanvorrichtung ist für ein Aufnehmen von Bildern der Bildaufnahmevorrichtungen für jeden geänderten Neigungswinkel eingerichtet. Die Steuerungs- und Auswerteeinrichtung ist zudem zum Auswerten der Einzelbilder der Bildaufnahmevorrichtungen zu einem Gesamtbild des Objektes mittels Photogrammetrie eingerichtet. Es kann also die Lage und der Fokus jeder Bildaufnahmevorrichtung bzw. jedes optischen Sensors einzeln angesteuert und variiert werden.

Der bedeutende Vorteil der Erfindung ist die Möglichkeit, jede Bildaufnahmevorrichtung hinsichtlich Ausrichtung und Fokussierung variieren zu können. Dadurch können sich die Systeme auf die wesentlichen Merkmale konzentrieren, indem beispielsweise mehr Kameras auf einen Kopf einer zu scannenden Person, welcher für eine detailgetreue Abbildung der Person besonders wichtig ist, gerichtet werden können. Konkret kann durch die Beweglichkeit und die Ausrichtung der Bildaufnahmevorrichtungen die Überlappung der Bilder von verschiedenen optischen Sensoren so eingestellt werden, dass detailreiche Bereiche des zu scannenden Objektes durch einen höheren Überlappungsbereich verbessert aufgelöst werden können, während in detailarmen Bereichen des Objektes nur ein geringerer Überlappungsbereich zur Anwendung kommen kann. Vorteilhaft kann also in Bereichen mit einem höherem Überlappungsgrad eine höhere Objektauflösung und bei geringerem Überlappungsgrad eine geringere Objektauflösung des zu scannenden Objektes erreicht werden. Ebenso ist es möglich, reine Detailaufnahmen oder reine Übersichtsaufnahmen des Objekts zu erzeugen, indem im ersten Fall für alle optischen Sensoren eine hohe Überlappung und im zweiten Fall für alle Sensoren eine niedrige Überlappung eingestellt wird. Hinzu kommt, dass das zu scannende Objekt bezüglich seiner Größe weitaus mehr differieren kann als bei einer unbeweglichen Sensorausrichtung. Es können überdies Voreinstellungen eingerichtet werden, die je nach Aufnahmesituation abgerufen werden und folglich eine Beschleunigung der Bearbeitungszeit garantieren.

Der Scanner weist in einem bevorzugten, aber nicht beschränkenden Ausführungsbeispiel eine Dimension auf, die im Zentimeter- bis in den Meterbereich liegt. Es werden bevorzugt Objekte gescannt, deren Größe im Zentimeterbereich bis zum einstelligen Meterbereich liegt. Vorteilhafterweise können jedoch durch die Modularität des Aufbaus des erfindungsgemäßen Scanners aus Verbindungselementen und Bildaufnahmemodulen flexible Aufbauten und Dimensionen von erfindungsgemäßen Scannern erreicht werden. So kann ein erfindungsgemäßer Scanner in einem anderen Ausführungsbeispiel auch Dimensionen im dreistelligen Meterbereich aufweisen. Somit können auch Objekte eingescannt werden, die 100 m und mehr lang sind.

Der Sensorcontroller einer Bildaufnahmevorrichtung ist bevorzugt ein Einplatinencomputer. Dies erlaubt eine individuelle Programmierung des Sensorcontrollers ebenso wie eine kostengünstige und platzsparende Ausführung. Der Sensorcontroller ist mit den optischen Sensoren zur Steuerung derselben verbunden.

Die optischen Sensoren der Bildaufnahmevorrichtungen sind bevorzugt durch handelsübliche Digitalkameras ausgebildet. Dadurch kann der erfindungsgemäße Scanner kostengünstig hergestellt werden. Es können 1..N optische Sensoren vorgesehen sein, wobei N eine natürlich Zahl ist. Eine höhere Anzahl von optischen Sensoren erhöht vorteilhafterweise die Auflösung des Objektes.

In einem anderen bevorzugten Ausführungsbeispiel sind die optischen Sensoren durch Paare von Stereokameras ausgebildet. Dadurch werden Stereobilder des zu scannenden Objektes aufgenommen, wodurch eine dreidimensionale Auswertung der Bilder erleichtert wird.

Ferner kann eine Bildausgabevorrichtung vorgesehen sein. Dadurch kann der Benutzer des Scanners unmittelbar nach Bildaufnahme das aufgenommene Bild betrachten.

Bevorzugt ist ferner ein Touchscreen zur Steuerung der 3D-Scanvorrichtung vorgesehen, der auch gleichzeitig als Bildausgabevorrichtung dienen kann. Dies erlaubt eine einfache und unmittelbare Bedienung des 3D-Scanners.

Zudem ist bevorzugt eine Beleuchtungseinheit zur Beleuchtung eines zu scannenden Objektes vorgesehen. Die Beleuchtungseinheit kann in den Bildaufnahmemodulen angeordnet sein. Die Beleuchtungseinheit kann in einem Ausführungsbeispiel eine Blitzlichteinheit sein. Es können aber auch in einem anderen bevorzugten Ausführungsbeispiel mehrere Beleuchtungs- oder Blitzlichteinheiten vorgesehen sein. In einem anderen Ausführungsbeispiel kann die Beleuchtungseinheit als Dauerbeleuchtungseinheit vorgesehen sein, die das Objekt über eine gewisse Zeitspanne, die größer ist als die Dauer eines Blitzes, ausleuchtet. Eine Dauerbeleuchtungseinheit zur Grundbeleuchtung des Objektes kann beispielsweise aus LED-Streifen ausgebildet sein. Die LED-Streifen können in Seitenprofilen der Bildaufnahmemodule oder Bildaufnahmevorrichtungen vorgesehen sein. Es können auch gemischte Formen von Beleuchtungseinheiten vorgesehen sein, z.B. Blitzlichteinheiten und Dauerbeleuchtungseinheiten zusammen.

Die Steuerungs- und Auswerteeinrichtung ist bevorzugt dazu ausgebildet, Bilddaten der Bildaufnahmevorrichtungen zeitlich sequentiell von den jeweiligen Bildaufnahmevorrichtungen zu empfangen. Die Steuerungs- und Auswerteeinrichtung steuert das Empfangen der Bilder der einzelnen Bildaufnahmevorrichtung. Jede Bildaufnahmevorrichtung weist dazu bevorzugt einen Speicher auf, indem das oder die von ihr aufgenommene(n) Bild(er) gespeichert werden kann oder können. Dadurch kann die hohe, zum Auslösezeitpunkt anfallende Datenmenge der Aufnahmevorrichtungen zeitlich sequentiell verarbeitet werden.

Eines der Verbindungselemente umfasst bevorzugt einen Teil der Steuerungs- und Auswerteeinrichtung. Die Verbindungselemente weisen bevorzugt eine größere Ausdehnung als die Aufnahmemodule auf. Daher kann an Ihnen ein Touchscreen oder eine Bildausgabevorrichtung angeordnet werden.

Die Bildaufnahmevorrichtungen sind in dem bevorzugten Ausführungsbeispiel in horizontal übereinander angeordneten Ebenen angebracht. Der Objektbereich wird also von optischen Sensoren in festen Ebenen aufgenommen. Dies erleichtert die Auswertung der Aufnahmen.

Die horizontale Achse der optischen Sensoren ist bevorzugt um 90° drehbar ausgebildet. Dies ermöglicht ein schnelles Einstellen der optischen Sensoren.

Die Steuerungs- und Auswerteeinrichtung ist bevorzugt dazu eingerichtet, eine Überlappung der Bilder von unterschiedlichen Bildaufnahmevorrichtungen durch Variation der Neigungswinkel der optischen Sensoren (120) zu variieren. So kann in einem Objektbereich die Überlappung der Bilder der diesen Bildbereich aufnehmenden optischen Sensoren vergrößert werden und die Detaildichte in diesem Bereich gegenüber anderen Bereichen des Objektes individuell vergrößert werden.

Ein Verbindungselement ist bevorzugt als Tür eingerichtet, wodurch der Scanbereich von Personen betreten werden kann bzw. das zu scannende Objekt in den Scanbereich platziert werden kann.

Der geschlossene Grundriss weist bevorzugt die Form eines regelmäßigen Vielecks auf, z. B. eines Achtecks. Es kann aber auch ein Kreis oder eine Ellipse ausgebildet werden.

Ferner wird ein Verfahren zum dreidimensionalen Scannen von Objekten mit einer erfindungsgemäßen 3D-Scanvorrichtung vorgeschlagen. Das Verfahren umfasst ein vertikales Scannen des Objektes durch sequentielles Ändern des Neigungswinkels der optischen Sensoren der Bildaufnahmevorrichtungen und ein Aufnehmen von Bildern durch die Bildaufnahmevorrichtungen für jeden geänderten Neigungswinkel. Die Einzelbilder werden zu einem Gesamtbild des zu scannenden Objektes mittels Photogrammetrie ausgewertet. Vorteilhafterweise stehen durch das Verfahren für eine Auswertung der Aufnahmen im Rahmen einer Mehrbild-Photogrammetrie mehr Daten zur Verfügung. Dies führt zu einer verbesserten Berechnung der räumlichen Anordnung der aufgenommenen Merkmale des gescannten Objektes.

Die Bildaufnahmevorrichtungen umfassen bevorzugt aber nicht beschränkend Stereokamerapaare. Die Stereokamerapaare können aus zwei handelsüblichen Digitalkameras gebildet werden, die in einem festen Abstand mit gleichem Neigungswinkel zur horizontalen Achse angeordnet sind. Die Daten werden mittels der bekannten Grundlagen der Mehrbild-Photogrammetrie ausgewertet.

Vorteilhafte Weiterbildungen der Erfindung sind in den Unteransprüchen angegeben und in der Beschreibung beschrieben.

Zeichnungen

Ausführungsbeispiele der Erfindung werden anhand der Zeichnungen und der nachfolgenden Beschreibung näher erläutert. Es zeigen:

Figur 1     eine erfindungsgemäße 3D-Scanvorrichtung,

Figur 2     ein erfindungsgemäßes Standard-Bildaufnahmemodul,

Figur 3     ein erfindungsgemäßes Master-Bildaufnahmemodul mit Verbindungselement,

Figur 4     eine erfindungsgemäße Master-Steuerungsbox,

Figur 5     eine erfindungsgemäße Standard-Steuerungsbox,

Figur 6     eine erfindungsgemäße Bildaufnahmevorrichtung in einer ersten Ansicht,

Figur 7     eine erfindungsgemäße Bildaufnahmevorrichtung in einer zweiten Ansicht,

Figur 8     eine Blitzlichteinheit der erfindungsgemäßen 3D-Scanvorrichtung,

Figur 9     einen horizontalen Querschnitt durch die erfindungsgemäße 3D-Scanvorrichtung,

Figur 10    einen vertikalen Querschnitt durch die erfindungsgemäße 3D-Scanvorrichtung,

Figur 11    Größen der optischen Sensoren in Bezug auf das zu scannende Objekt,

Figur 12    eine schematische Darstellung zur Berechnung der Winkeleinstellung der optischen Sensoren,

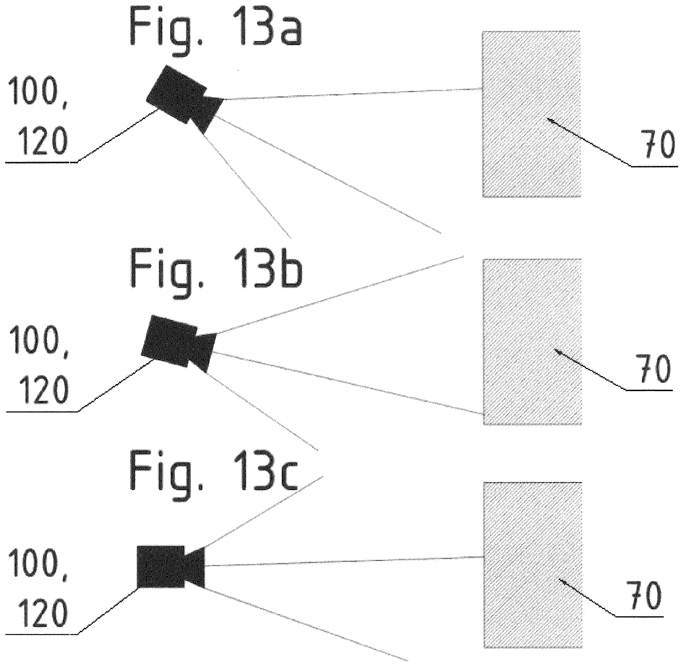

Figur 13    eine schematische Darstellung eines erfindungsgemäßen Bildaufnahmeverfahrens.

Ausführungsformen der Erfindung

Der Schwerpunkt der vorliegenden Erfindung liegt auf Objektaufnahmen durch optische Sensoren, bevorzugt Kamerasensoren, welche mittels photogrammetrischer Verfahren zu einem 3D-Modell des Objekts verarbeitet werden.

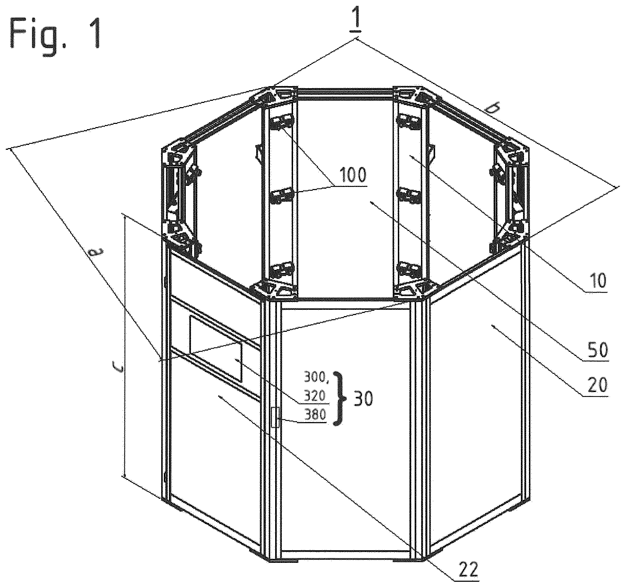

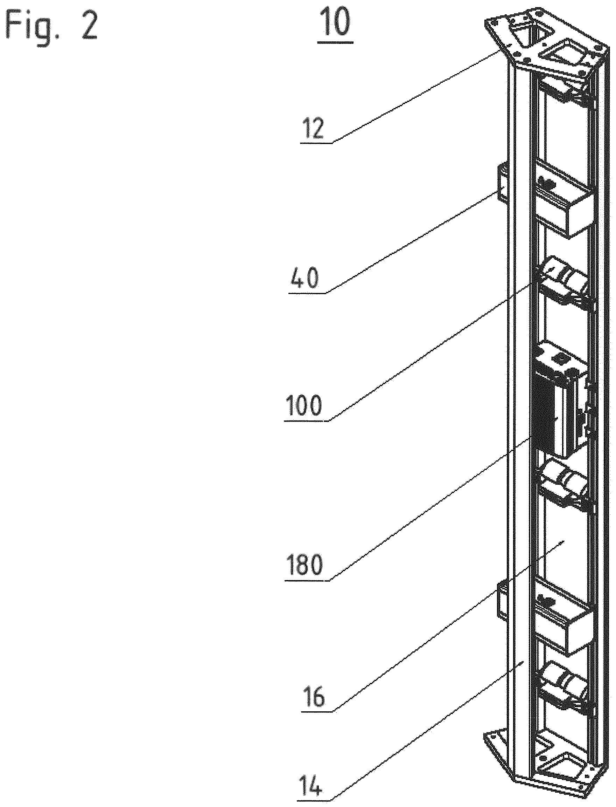

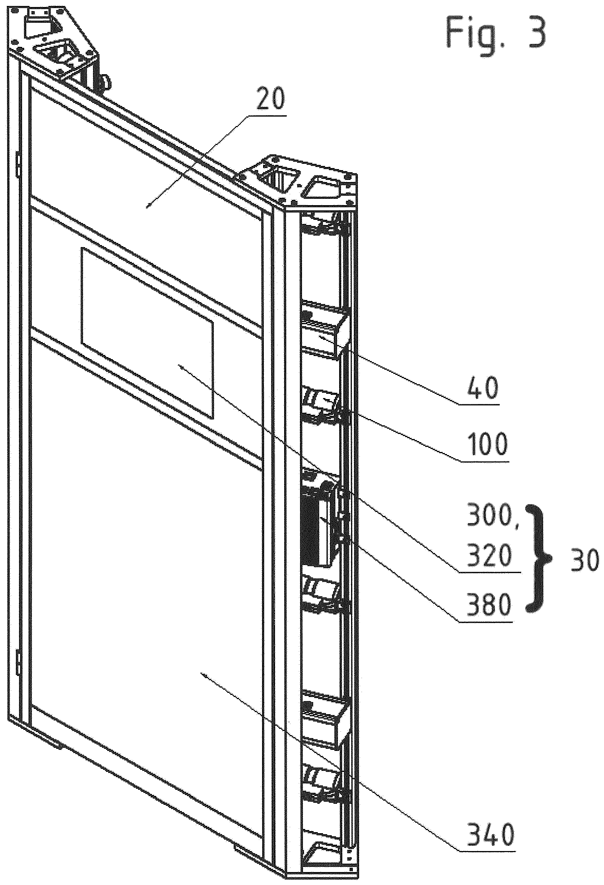

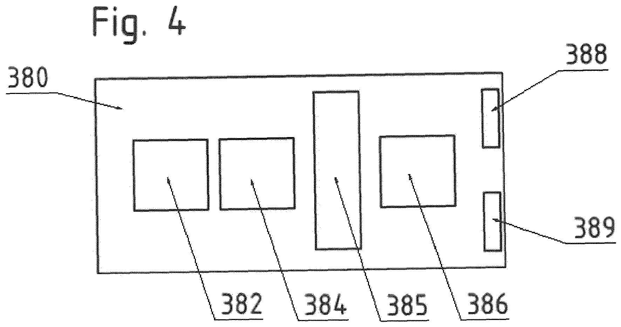

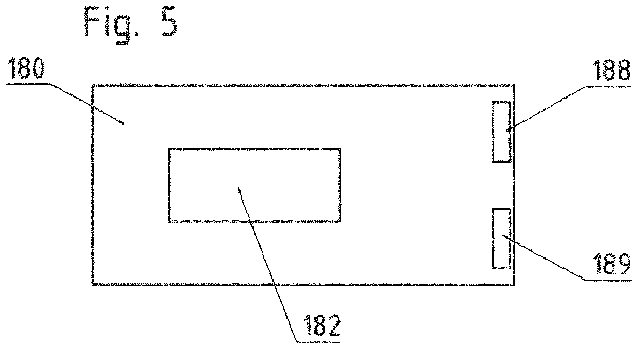

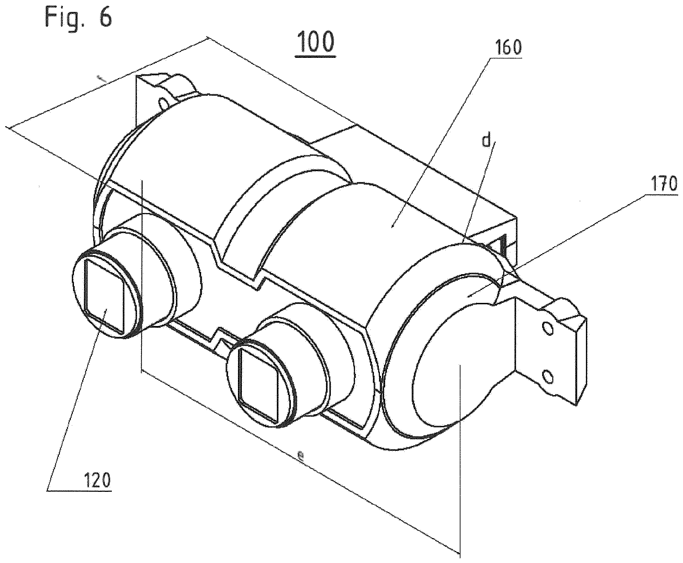

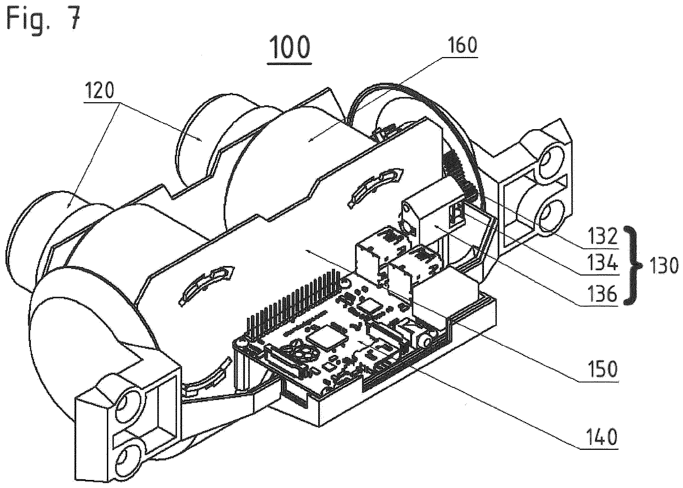

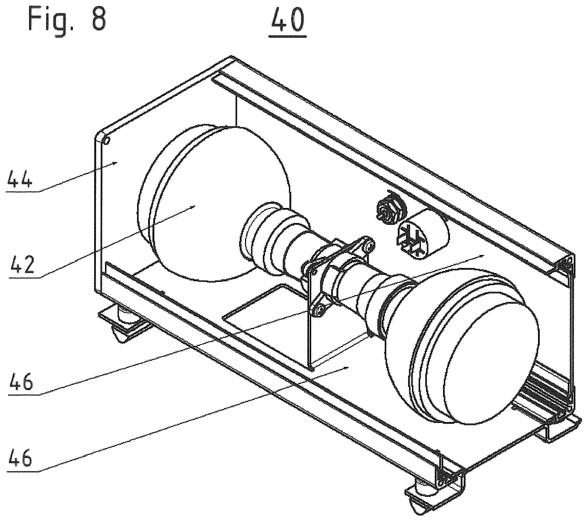

In der Figur 1 ist eine erfindungsgemäße 3D-Scanvorrichtung 1 dargestellt. Figur 2 zeigt eine Detailansicht eines Bildaufnahmemoduls 10 als Standard-Bildaufnahmemodul 10. Figur 3 zeigt eine Detailansicht eines Master-Bildaufnahmemoduls 10 mit einem Verbindungselement 20, die zusammen die Steuerungs- und Auswerteeinrichtung 30 umfassen. Figur 4 zeigt eine Master-Steuerungsbox 380 und Figur 5 eine Standard-Steuerungsbox 180. Figur 6 und Figur 7 zeigen verschiedene Ansichten einer Bildaufnahmevorrichtung 100 und Figur 8 zeigt eine Beleuchtungseinheit 40 in einer Ausführung als Blitzlichteinheit.

Die 3D-Scanvorrichtung 1 der Figur 1 weist eine Mehrzahl von miteinander über Verbindungselemente 20 verbundener Bildaufnahmemodule 10 auf, die zusammen einen geschlossenen Grundriss ausbilden und im Inneren einen Scanbereich 50 definieren. Im vorliegenden, aber nicht beschränkenden Ausführungsbeispiel ist der Grundriss ein regelmäßiges Vieleck, genauer ein Achteck aus acht Bildaufnahmemodulen 10 und sieben Verbindungselementen 20. Je nach gewünschter Auflösung können aber auch mehr Bildaufnahmemodule 10 vorgesehen sein, z. B. sechzehn. Ferner kann der Grundriss auch einen Kreis oder eine Ellipse ausbilden.

Die 3D-Scanvorrichtung 1 weist zudem eine Steuerungs- und Auswerteeinrichtung 30 zur Steuerung und Auswertung der Bildaufnahmevorrichtungen 100 auf, wobei die Steuerungs- und Auswertvorrichtung 30 dazu eingerichtet ist, jede Bildaufnahmevorrichtung 100 separat und individuell anzusteuern und auszurichten zu können.

Jedes Bildaufnahmemodul 10 umfasst wie in Figur 2 gezeigt eine Mehrzahl von vertikal übereinander angeordneten Bildaufnahmevorrichtungen 100 auf. Zudem sind mindestens eine Beleuchtungseinheit 40, die beispielsweise und nicht beschränkend eine Blitzlichteinheit sein kann, und eine Steuerungsbox 180 vorgesehen. Bevorzugt sind mehrere Beleuchtungseinheiten 40 vorgesehen. In dem gezeigten Ausführungsbeispiel sind rein beispielhaft vier Bildaufnahmevorrichtungen 100 je Bildaufnahmemodul 10 vorgesehen. Ferner kann das Bildaufnahmemodul 10 optional eine Boden- bzw. Topplatte 12, einen Rahmen 14 und Blenden 16 aufweisen.

Im gezeigten Ausführungsbeispiel der Figur 1 und Figur 3 umfasst die Steuerungs- und Auswerteeinrichtung 30 eine in einem Bildaufnahmemodul 10 angeordnete Master-Steuerungsbox 380 und einen Touchscreen 320, der Teil eines benachbarten Verbindungselementes 20 ist. Es kann jedoch statt eines Touchscreens 320 auch ein Bildschirm 300 und eine manuelle Eingabeeinheit in Form eines Keyboards (nicht gezeigt) oder es kann allein eine manuelle Eingabeeinheit vorgesehen sein. Diese kann auch an dem Bildaufnahmemodul 10 vorgesehen sein, welches die Master-Steuerungsbox 380 beherbergt. Auch kann die Master-Steuerungsbox 380 derart ausgebildet sein, dass sie über Funk, LAN oder WLAN Steuerbefehle erhalten kann und ohne manuelle Eingabeeinheit ausgebildet ist. Die Steuerungs- und Auswerteeinheit 30 steuert über die Master-Steuerungsbox 380 alle Bildaufnahmevorrichtungen 100 und steuert auch das Auswerten der von den Bildaufnahmevorrichtungen 100 aufgenommenen Bilder.

Fig. 4 zeigt eine schematische Darstellung der Master-Steuerungsbox 380. Sie umfasst einen Modulsteuerungscontroller 382 zur Steuerung von elektrischen Komponenten des betreffenden Bildaufnahmemoduls 10, z. B. der Beleuchtungseinheiten 40. Ferner weist sie einen Mastersteuerungscontroller 384 auf, der die Gesamtsteuerung der Bildaufnahme des erfindungsgemäßen 3D-Scanners 1 übernimmt. Auch ist eine Master-Speichereinheit 385 zur Speicherung und Verarbeitung der aufgenommenen Bilder des 3D-Scanners 1 vorgesehen. Ferner kann die Master-Steuerungsbox 380 optional eine Grafikeinheit 386 aufweisen, die eine Bildausgabe und eine Bedienung über einen Touchscreen 320 ermöglicht. Zudem sind Energieschnittstellen 388 zur Bereitstellung und Verteilung von Strom für den 3D-Scanner 1 sowie Datenschnittstellen 389 zur Verarbeitung der aufgenommenen Bilder des 3D-Scanners 1 vorgesehen.

Das Bildaufnahmemodul 10 mit der Master-Steuerungsbox 380, welches auch als Master-Bildaufnahmemodul 10 bezeichnet werden kann, unterscheidet sich von den anderen Bildaufnahmemodulen 10, den Standard-Bildaufnahmemodulen 10, des 3D-Scanners 1 allein durch die Ausbildung der Master-Steuerungsbox 380 gegenüber einer Modulsteuerungsbox 180, die in den anderen Modulen 10 an dessen Stelle vorgesehen ist. Die Modulsteuerungsbox 180 ist in Fig. 5 dargestellt und umfasst einen Modulsteuerungscontroller 182 sowie Energie- und Datenschnittstellen 188, 189. Die Modulsteuerungscontroller 182, 382 der Standard-Steuerungsbox 180 sowie der Master-Steuerungsbox 380 sind bevorzugt als Einplatinencomputer, z. B. Rasberry Pi's, ausgebildet. Auch der Mastersteuerungscontroller 384 ist bevorzugt als Einplatinencomputer ausgebildet, der aber eine deutlich erhöhte Leistung aufweist, als die Einplatinencomputer der Modulsteuerungscontroller 182, 382. Die Ausbildung als Einplatinencomputer ermöglicht eine bedarfsgerechte individuelle Programmierung des 3D-Scanners 1 und stellt eine kostengünstige sowie platzsparende Ausführung dar. Die Steuerungsbox 180 ist die Zentrale des Standard-Bildaufnahmemoduls 10 und steuert den Ein- und Ausschaltprozess des betreffenden sowie mindestens eines benachbarten Bildaufnahmemoduls 10 und z. B. den Ladeprozess für die Blitzlichteinheiten und alle elektronischen Bauteile des Moduls 10.

Das in Figur 1 und Figur 3 gezeigte Verbindungselement 20 mit der Bildausgabevorrichtung 300 bzw. dem Touchscreen 320 dient in dem gezeigten Ausführungsbeispiel auch als Tür oder Eingang 22 zum Betreten des Scanbereichs 50 durch Personen oder ein Verbringen von Objekten in den Scanbereich 50, der von den Verbindungselementen 20 und den Bildaufnahmemodulen 10 eingeschlossen wird. Der Eingang 22 besteht aus einer Türkonstruktion welche sich zwischen zwei Bildaufnahmemodulen 10 befindet. Jedoch kann stattdessen auch ein anderes Verbindungselement 20 als Eingang 22 ausgebildet sein, welches nicht Teil der Steuerungs- und Auswerteeinrichtung 30 ist.

Die erfindungsgemäße 3D-Scanvorrichtung ist dazu ausgebildet, Objekte mit einer Dimension im Zentimeterbereich bis in den Meterbereich zu scannen. Der Meterbereich kann zwischen 1-1000 m liegen, bevorzugt zwischen 1-200 m, noch bevorzugter zwischen 1-10 m, besonders bevorzugt zwischen 2-5 m. Die 3D-Scanvorrichtung weist beispielsweise eine Breite a (Ecke Bildaufnahmemodul 10 zu gegenüberliegender Ecke Bildaufnahmemodul 10) und eine Breite b (Verbindungselement 20 zu gegenüberliegendem Verbindungselement 20) sowie eine Hohe von c auf. In einem bevorzugten aber nicht beschränkenden Ausführungsbeispiel liegen die Größen a, b und c im niedrigen Meterbereich, z.B. zwischen 1-10 m, noch bevorzugter zwischen 2-5 m. Entsprechend sind die Größen eines Bildaufnahmemoduls 10 ausgebildet. Das rein beispielhaft vorgestellte Bildaufnahmemodul 10 der Figur 1 und 2 erstreckt sich zur Verbindung mit den Verbindungselementen 20 über einen Winkel von 45°.

Vorteilhafterweise können durch die Modularität des Aufbaus des erfindungsgemäßen Scanners 1 aus Verbindungselementen 20 und Bildaufnahmemodulen 10 flexible Aufbauten und Dimensionen von erfindungsgemäßen Scannern 1 erreicht werden. So kann ein erfindungsgemäßer Scanner 1 in einem anderen Ausführungsbeispiel auch Dimensionen im dreistelligen Meterbereich aufweisen. Somit können auch Objekte eingescannt werden, die sich über 100 m und erstrecken. Begrenzend wirken hier nur die Auflösungen der optischen Sensoren.

Ein Bildaufnahmemodul 10 weist mehrere Bildaufnahmevorrichtungen 100 auf, die wiederum mehrere optische Sensoren 120 aufweisen. Jede Bildaufnahmevorrichtung 100 umfasst dabei wie in Figur 6 und Figur 7 gezeigt mehrere auf einer horizontalen Achse 110 angeordnete optische Sensoren 120, eine Stelleinrichtung 130, die dazu ausgebildet ist, den Neigungswinkel der optischen Sensoren 120 bezüglich der z-Achse zu variieren, und einen Sensorcontroller 140 zur Steuerung der Stelleinrichtung und zur Einstellung und Auslösung der Bildaufnahme der optischen Sensoren 120. Optional weist die Bildaufnahmevorrichtung 100 eine Halteplatte 150 sowie ein Gehäuse 160 und eine Halterung 170 für die optischen Sensoren 120 auf. Die Anzahl der Bildaufnahmevorrichtungen 100 bzw. der optischen Sensoren 120 ist von verschiedenen Parametern, wie primär von der gewünschten Objektauflösung und der Objektgröße abhängig. Im gezeigten Ausführungsbeispiel ist je Bildaufnahmevorrichtung 100 rein beispielhaft und nicht beschränkend ein Stereokamerapaar vorgesehen. Die beiden optischen Sensoren des Stereokamerapaars weisen einen festen Abstand zueinander und ihr Neigungswinkel zur horizontalen Achse ist in allen Einstellungen immer gleich. Es können aber auch 1..N optische Sensoren vorgesehen sein, wobei N eine natürliche Zahl ist. Die während der Aufnahme gesammelten Daten werden mittels der bekannten Grundlagen der Mehrbild-Photogrammetrie ausgewertet.

Beispielhaft ist die Bildaufnahmevorrichtung 100 als Röhre mit z. B. einem Durchmesser von d, einer Breite von e und einer Tiefe von f ausgebildet. Sie enthält zwei optische Sensoren 120, beispielsweise zwei handelsübliche Digitalkameras, einen Einplatinencomputer als Sensorcontroller 140, wie z. B. einen Raspberry Pi, eine Platine zur Steuerung der elektrischen Bauteile, einen Speicher (nicht gezeigt) sowie eine Stelleinrichtung 130 mit einem Motor 134, einem Übersetzungsgetriebe 132 und einer Motorhalterung 136 (s. Figur 7). Der Sensorcontroller 140 kann durch eine Steuerungssoftware die optischen Sensoren 120 parametrisieren, Bilder auslösen und die Bildaufnahmevorrichtung 100 auf das Objekt ausrichten, z. B. in einem veränderbaren Bereich von 90°.

Die Beleuchtungseinheit 40 als Blitzlichteinheit der Figur 8 enthält beispielhaft in einem Gehäuse 46 zwei Blitzlichter 42, welche der Belichtung des Objektes während des Scanprozesses dienen. Vor den Blitzlichtern 42 sind Diffusoren 44 vorgesehen. Die Stromversorgung und das Auslösesignal der Blitzlichteinheit erfolgt durch die Steuerungsbox 180 des zugehörigen Bildaufnahmemoduls 10.

Vorteilhafterweise kann durch die Modularität des erfindungsgemäßen 3D-Scanners, bestehend aus Verbindungselementen 20 und Bildaufnahmemodulen 10, der Scanbereich durch die Einführung weiterer Bildaufnahmemodule 10 bzw. weiterer Verbindungselemente 20 flexibel und einfach vergrößert werden.

Die Steuerung des 3D-Scanners 1 erfolgt somit über die Steuerungs- und Auswerteeinheit 30 und dessen Master-Steuerungsbox 380. In einem Anschalt- und Initialisierungsprozess des 3D-Scanners wird zunächst die Master-Steuerungsbox 380 mit Strom versorgt. Die darin enthaltenen Controller 382, 384 fahren hoch und der Modulsteuerungscontroller 382 versorgt die auf dem Master-Bildaufnahmemodul 10 befindlichen Bildaufnahmevorrichtungen 10 mit deren Sensorcontrollern 140 mit Strom. Zudem versorgt der in dem gezeigten, aber nicht beschränkenden Ausführungsbeispiel ausgebildete Modulsteuerungscontroller 382 ein benachbartes Bildaufnahmemodul 10 bzw. des Modulsteuerungsbox 180 mit Strom. Dort wird der Modulsteuerungscontroller 382 hochgefahren und es werden die Komponenten des betreffenden Moduls mit Strom versorgt. Wiederum löst dann die gerade hochgefahrene Modulsteuerungsbox 180 die Initialisierung des nächsten benachbarten Bildaufnahmemoduls 10 aus. Somit wird sequentiell der 3D-Scanner 1 in Betrieb genommen.

Nach der Initialisierung steuert die Master-Steuerungsbox 380 die Sensoreinstellung, Winkeleinstellung und Bildauslösung aller Bildaufnahmevorrichtungen 100 des 3D-Scanners 1 und die Steuerungsboxen 180 steuern die Beleuchtungseinheiten 40 des betreffenden Moduls 10. Ist ein Bild aufgenommen worden, so werden die Einzelbilder zunächst in einem Speicher der Bildaufnahmevorrichtungen 100 gespeichert. Die Master-Steuerungsbox 380 steuert dann sequentiell jede Bildaufnahmevorrichtung 100 an und lädt die betreffenden Daten in den Master-Speicher 385. Sind alle Bilder der Bildaufnahmevorrichtungen 100 im Master-Speicher 385 gespeichert, werden die Einzelbilder zu einem Gesamtbild des zu scannenden Objektes aufgearbeitet.

Im Folgenden wird nunmehr die erforderliche Winkeleinstellung und das Scanverfahren des erfindungsgemäßen 3D-Scanners 1 beschrieben werden.

Zur Berechnung der 3D-Koordinate von Bildpunkten wird ein Verfahren oder besser eine Gruppe von Methoden verwendet, welche aus der Fernerkundung kommen und Photogrammmetrie genannt werden. Die Photogrammmetrie dient dazu, die Kameraanordnung von zwei oder mehreren Bildern eines Objektes zu errechnen, welche zum Zeitpunkt der Aufnahme existierte. Diese Verfahren sind bekannt und sollen hier nicht näher erläutert werden.

Für den 3D-Scanner 1 werden hochauflösende optische Sensoren bzw. Kameras 120 benötigt, deren innere und äußere Orientierung bekannt sind. Bei der Vermessung eines Objektes 70 müssen viele signifikante Punkte auf dem Objekt 70 durch möglichst viele Bildaufnahmevorrichtungen 100 (mindestens zwei) erkannt werden, damit diese in der Photogrammmetrie in eine 3D-Koordinate umgewandelt werden können. Eine möglichst hohe Anzahl an identifizierten Bildpunkten verbessert hierbei die Berechnungsgenauigkeit der Koordinaten. Daher sollte ebenfalls ein möglichst hoher Überlappungsbereich zwischen zwei Bildaufnahmevorrichtungen 100 bzw. zwischen optischen Sensoren 120 bestehen, um möglichst viele gemeinsame Bildpunkte für die Koordinatenberechnung zu haben. Die Größenverhältnisse (Fokus, Blende), Position und Drehung der Kamera (äußere Orientierung) kann eher vernachlässigt werden. Dies bedeutet, dass Blende und Fokus eines optischen Sensors 120 auf zwei unterschiedlichen Positionen für ein Bild nicht unbedingt derart abgestimmt sein müssen, dass sie gleiche Längenverhältnisse im Bild darstellen.

Im Folgenden wird die Berechnung einer nötigen Überlappung und eines Zooms der optischen Sensoren 120 näher beschrieben werden.

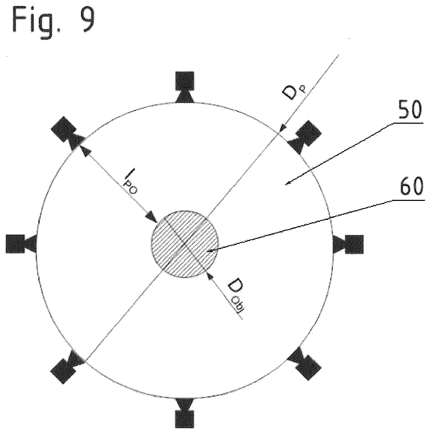

Es wird zunächst angenommen, dass ein 3D-Scanner 1 benutzt wird, welcher aus mehreren gleichartigen Bildaufnahmemodulen 10 besteht. Jedes Bildaufnahmemodul 10 besteht aus mindestens zwei und maximal n optischen Sensoren 120. Die Bildaufnahmemodule 10, auch Pole 10 genannt, sind in einem Kreis mit dem Durchmesser DP um das zu scannende Objekt aufgestellt. Das zu scannende Objekt selber wird als ein Zylinder mit dem Durchmesser $D_{Obj}$ angesehen. Damit ergibt sich ein Normalenabstand $l_{PO}$, ein Abstand zwischen Bildaufnahmemodul bzw. Pol 10 und dem Objekt 70 wie in Figur 9 gezeigt.

$$l_{PO} = \frac{D_P}{2} - \frac{D_{Obj}}{2}$$ 
Gleichung 4.1

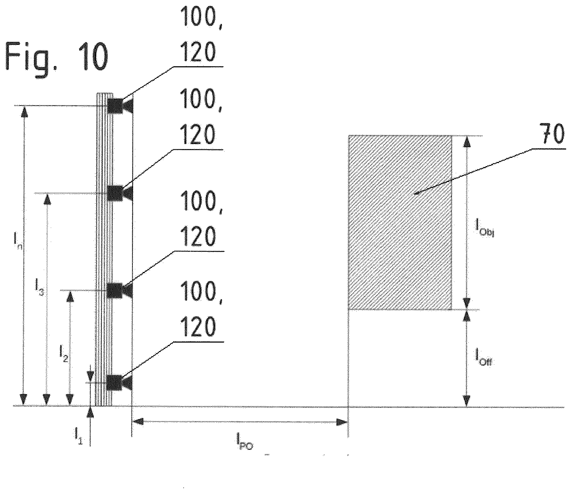

Die Bildaufnahmevorrichtungen 100 eines Bildaufnahmemoduls 10 sind übereinander angeordnet. Die Nummerierung erfolgt vom Boden aus, wie in Figur 10 gezeigt.

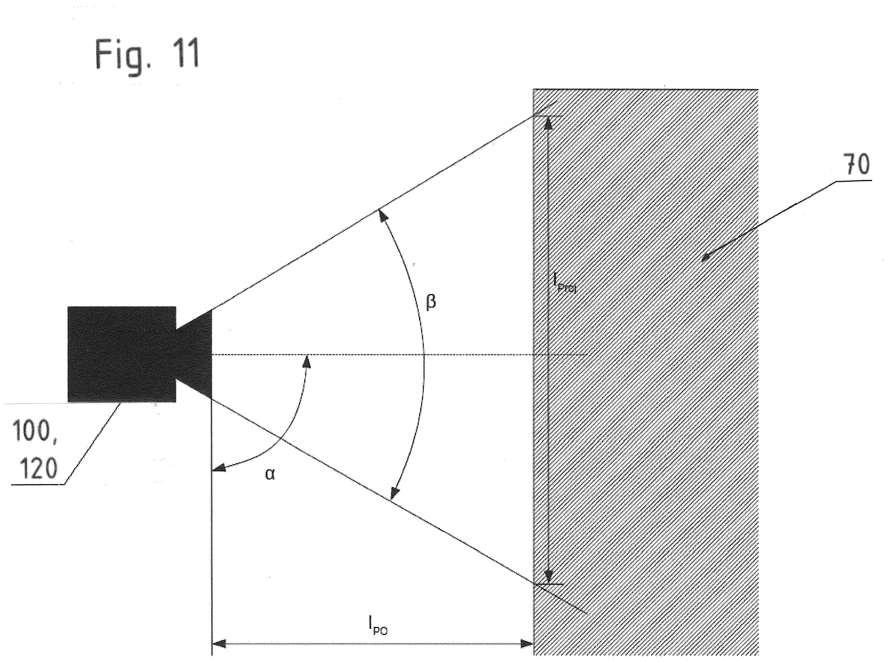

Die Bildaufnahmevorrichtungen 100 müssen nun so ausgerichtet werden, dass eine möglichst große Überlappung sowie eine optimale Ausnutzung der Bilder einer jeden Bildaufnahmevorrichtung 100 möglich sind. In der Figur 11 ist zu sehen, dass gerade die unterste und oberste Bildaufnahmevorrichtung 100 durch eine parallele Ausrichtung aller Bildaufnahmevorrichtungen 100 teilweise nur kleine Bereiche des zu scannenden Objektes 70 in ihren aufgenommenen Bildern haben werden. Selbst eine statische Angleichung der Winkel führt bei unterschiedlich großen Objekten $l_{Obj}$, welche eine unterschiedliche Aufstellhöhe $l_{Off}$ haben, zu keiner optimalen Aufnahme der Szene.

Für spätere Berechnungen wird die Objekthöhe $l_{Obj}$ mit einem Sicherheitsfaktor $s_{Obj}$ vergrößert. Dies wird benötigt, um den oberen und unteren Rand des zu scannenden Objektes sicher im Bildausschnitt der oberen und unteren Kamera zu erfassen.

$$l_{Obj,korr} = s_{Obj} \cdot l_{Obj}$$ 
Gleichung 4.2

Der Sicherheitsfaktor $s_{Obj}$ sollte dabei einen Wert größer 1 haben. Für große Objekte kann $s_{Obj}$ kleiner (~ 1,05) und für kleinere Objekte größer (~ 1,2) gewählt werden. Durch den Sicherheitsfaktor muss auch die Offsethöhe $l_{Off}$, auch Aufstellhöhe genannt, angepasst werden.

$$l_{Off,korr} = l_{Off} - \frac{(s_{Obj}-1)}{2} \cdot l_{Obj}$$ 
Gleichung 4.3

Für die Winkeleinstellung der Bildaufnahmevorrichtungen 100 müssen die beiden Begriffe Sensorwinkel $\alpha$ und Sensoröffnungswinkel $\beta$ definiert werden. Der Sensorwinkel $\alpha$ in der Figur 11 ist bei allen optischen Sensoren 120 gleich. Sie schauen parallel vom Bildaufnahmemodul 10 Richtung Objekt 70 mit -90° zum Objekt 70. Durch den Sensoröffnungswinkel wird in der Entfernung $l_{PO}$ eine bestimmte Projektionsfläche $l_{Proj}$ von dem Objekt 70 im Bild dargestellt. Aus dem Tangenssatz ergibt sich gemäß Fig. 11:

$$tan\left(\frac{\beta}{2}\right) = \frac{\frac{l_{Proj}}{2}}{l_{PO}}$$ 
Gleichung 4.4

Für die projizierte Länge ergibt sich somit:

$$l_{Proj} = 2 \cdot l_{PO} \cdot tan\left(\frac{\beta}{2}\right)$$ 
Gleichung 4.5

Somit ergibt sich eine aufgrund der Bildaufnahmevorrichtungsanzahl n eine maximale Höhe des zu scannenden Objektes 70 von:

$$l_{Ob,korr} = n \cdot l_{Proj}$$

Gleichung 4.6

Dies gilt aber nur ohne Überlappung. Für die Photogrammmetrie ist aber eine Überlappung "Ov" der Bilder notwendig, wodurch sich die Gleichung 4.6 wie folgt ändert:

$$l_{Obj,korr} = n \cdot l_{Proj} - (n-1) \cdot Ov \cdot l_{Proj}$$

Gleichung 4.7

Die einzige unbekannte Größe in der Gleichung 4.7 ist die Überlappung der Bilder. Alle anderen Größen ergeben sich aus den Ausgangswerten. Somit lässt sich die Überlappung wie folgt berechnen:

$$Ov = \frac{n \cdot l_{Proj} - l_{Obj,korr}}{(n-1) \cdot l_{Proj}}$$

Gleichung 4.8

wobei Ov größer 1,0 bedeutet, dass der Zoom des optischen Sensors 120 erhöht werden sollte. Ov größer gleich 0,5 und kleiner gleich 1,0 wäre der optimale Bereich und Ov kleiner 0,5 bedeutet, dass der Zoom des optischen Sensors 120 verkleinert werden sollte.

Über $l_{proj}$ ist der Öffnungswinkel $\beta$ der Kamera in der Formel 4.8 verankert:

$$Ov = \frac{2 \cdot n \cdot l_{PO} \cdot tan\left(\frac{\beta}{2}\right) - l_{Obj,korr}}{2 \cdot (n-1) \cdot l_{PO} \cdot tan\left(\frac{\beta}{2}\right)}$$

Gleichung 4.9

Wenn man jetzt mit dem in Gleichung 4.8 angegebenen optimalen Bereich $0.5 \le Ov \le 1.0$ arbeitet, kann man die Gleichung 4.9 nach dem Öffnungswinkel $\beta$ umstellen.

$$\beta = 2 \cdot arctan\left(\frac{l_{Obj,korr}}{2 \cdot l_{PO} \cdot (n - Ov \cdot (n-1))}\right) mit \ 0.5 \leqslant Ov \leqslant 1.0$$

Mit den bisher ermittelten Gleichungen können bisher die optischen Sensoren 120 abhängig von ihrer Anzahl pro Bildaufnahmemodul 10 optimal an das Objekt 70 hinsichtlich Überlappung und Zoom eingestellt werden.

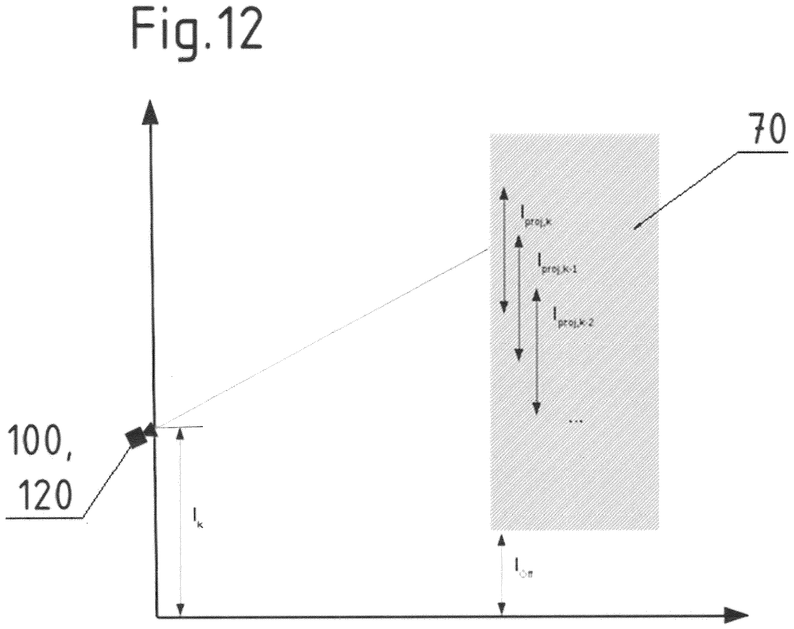

Für die Winkeleinstellung des Sensorwinkels wird die vereinfachte Darstellung in Figur 12 verwendet. Es wird angenommen, dass der optische Sensor k eingestellt werden muss, wobei k von 1..N ist, und N eine natürliche Zahl ist. Für die Winkeleinstellung wird ein Algorithmus gesucht, bei dem möglichst keine Informationen von den vorherigen und nachfolgenden optischen Sensoren benötigt werden. Es werden nur die Sensorposition k im Bildaufnahmemodul und die geometrischen Informationen wie $l_{Obj}$, $l_{PO}$, $l_k$ u.s.w. übergeben.

Aus den geometrischen Größen ergibt sich folgende Formel für den Kamerawinkel $\alpha$:

$$\alpha = arctan\left(\frac{l_{Off} + \left(k - \frac{1}{2}\right) \cdot l_{Proj} - (k-1) \cdot Ov \cdot l_{Proj} - l_k}{l_{PO}}\right) + 90°$$

Um eine Gleichung mit ausschließlich vorhandenen Ausgangswerten zu haben, müssen noch die Gleichungen 4.5 und 4.9 eingesetzt werden. Darauf wird hier verzichtet. Da in vorherigen Schritten die optimale Überlappung und der dafür nötige optimale Zoom (Sensoröffnungswinkel $\beta$, welcher über die Größen Ov und $l_{Proj}$ in die Gleichung gelangen) ermittelt wurde, ist auch der Sensorwinkel optimiert. Jeder Sensorwinkel für jeden Sensor 120 bzw. für jede Bildaufnahmevorrichtung 100 am Bildaufnahmemodul 10 kann aus der Geometrie des 3D-Scanners 1 und des zu scannenden Objektes 70 errechnet werden. Hierzu sind lediglich Informationen zur Position der Bildaufnahmevorrichtung 100 bzw. der optischen Sensoren 120 notwendig. Anhand der charakteristischen Größen von 3D-Scanner 1 und zu scannendem Objekt 70 können alle notwendigen Größen für die Bildaufnahme (Zoom, Überlappungsgrad und Winkeleinstellung jedes optischen Sensors 120 bzw. jeder Bildaufnahmevorrichtung 100) berechnet werden. Die richtigen Bildaufnahmeeinstellungen sind notwendig, um ein verbessertes Ergebnis vom 3D-Scanner 1 zu erhalten. Bei der Optimierung von Werten ist darauf zu achten, dass die Optimierung zu mehr Bildpunkten des Objektes im Sensorbild (Zoom) führt. Da die Sensoren eine große Auflösung haben, werden immer ausreichend Bildpunkte für eine 3D-Berechnung vorhanden sein.

Vorteilhaft ist es ferner, nur wenige Hintergrundbildpunkte mit aufzunehmen, die in weiteren Bildbearbeitungsschritten entfernt werden.

Im erfindungsgemäßen 3D-Scanverfahren werden unter Ausnutzung der Änderung des Aufnahmewinkels eines optischen Sensors 120 bzw. eines Paares von optischen Sensoren 120 mehrere Bilder vom gleichen Objekt aufgenommen. Der Standort der optischen Sensoren 120 wird bei dem Verfahren beibehalten. Lediglich die Neigung wird geändert. Unter dieser Prämisse werden bei X-Aufnahmedurchgängen die Datenvielfalt um einen Faktor X, je nach Anzahl der Bilder/Winkel erhöht. Dies ist schematisch in Figur 11 gezeigt.

Das Verfahren läuft wie folgt ab:

- die Bildaufnahmevorrichtung 100 fährt den angegebenen Ausgangswinkel φ an;
- die Bildaufnahmevorrichtung 100 nimmt das 1. Bild auf;
- die Bildaufnahmevorrichtung 100 rotiert um einen definierten Änderungswinkel Δφ;
- die Bildaufnahmevorrichtung 100 nimmt ein 2. Bild auf;
- die Bildaufnahmevorrichtung 100 rotiert wiederum um einen definierten Änderungswinkel Δφ;
- die Bildaufnahmevorrichtung 100 nimmt ein 3. Bild auf;
- ...
- die Bildaufnahmevorrichtung 100 verfährt um einen definierten Änderungswinkel Δφ;
- die Bildaufnahmevorrichtung 100 nimmt ein x.tes Bild auf

Der erreichte Effekt dabei ist, deutlich mehr Bilder für eine 3D-Rekonstruktion des Objektes zur Verfügung zu haben. Die Genauigkeit einer jeden Punktberechnung infolge einer Triangulation über mehrere Positionen der Bildaufnahmevorrichtung 100 wird hierdurch verbessert und somit das berechnete Gitter signifikant lagegenauer.

Die aufgenommenen Bilder können nach dem bekannten Mehrbild-Photogrammetrie-Verfahren ausgewertet werden, bei dem eine Feature-Extraktion durch Korrelation und Bündeltriangulation zur Anordnung der Punkte im Raum erfolgt. Es können aber auch andere Verfahren zum Einsatz kommen.

Durch den erfindungsgemäßen Mehrfachscan mit einem sich zwischen den Bildaufnahmen ändernden Winkel wird durch das Bereitstellen einer größeren Menge von Daten eine höhere Differenzierung und Verbesserung der Objektauflösung erreicht.

In einem Ausführungsbeispiel können in den Bildaufnahmevorrichtungen 100 Paare von Stereokameras verbaut sein. In diesem Ausführungsbeispiel kann die Genauigkeitsverbesserung über die Stereoanordnung der optischen Sensoren 120 weiter verbessert werden. Es liegen durch das erfindungsgemäße Verfahren anstatt eines Datensatzes pro Stereo-Kamerapaar mehrere Datensätze vor. Dies führt zu einer höheren Berechnungsdauer, was aber durch Anpassung der Hardware teilweise kompensiert werden kann.

Grundsätzlich können im Rahmen der Mehrbild-Photogrammetrie zur Auswertung der Bilder auch Verrechnungen zwischen optischen Sensoren 120 verschiedener Stereokamerapaare erfolgen, z. B. zwischen Stereokamera A1, wobei Kamera A1 und Kamera A2 ein erstes Stereokamerapaar bilden, und Stereokamera B2, wobei Kamera B1 und Kamera B2 ein zweites, vom ersten verschiedenes Stereokamerapaar ausbilden. Dies kann auch auf weitere Stereokamerapaare ausgedehnt werden.

Das erfindungsgemäße Verfahren führt letztendlich zu einer Reduzierung des Arbeitsaufwandes in der Nachbereitung von 3D-Objekten. Ein 3D-Scanner 1 mit einer spezifischen Anzahl in ihm verbauten Bildaufnahmevorrichtungen 100 weist durch dieses Verfahren die Qualität eines 3D-Scanners 1 auf, welcher x-fach mehr Bildaufnahmevorrichtungen 100 enthält.

In einem bevorzugten Scanverfahren ist zudem die Aufnahme durch die Verwendung einer rotierenden Halterung der optischen Sensoren 120 automatisierbar. Die Neigungsachse der optischen Sensoren könnte also frei um 90° drehbar ausgebildet sein.

Der erfindungsgemäße 3D-Scanner 1 ermöglicht es, in Bruchteilen einer Sekunde zwischen 50 und 100 Bildern eines Objektes oder einer Person aufzunehmen und diese Daten in einem rechenintensiven Arbeitsprozess in ca. 1 - 3 h zu einer originalgetreuen 3D-Figur umzurechnen.

Der erfindungsgemäße 3D-Scanner 1 zeichnet sich durch verschiedene funktionelle Eigenschaften aus. Es erfolgt eine Winkeleinstellung der optischen Sensoren 120 bis auf die erste Dezimalstelle genau, mit einer Toleranz von 0,1°. Der Scanbereich ist dabei variabel von z. B. 5 x 5 x 5 cm bis z. B. 110 x 110 x 210 m. Die Scanzeit beträgt kleiner 10 ms. Es können mehr als 30 Aufnahmen pro Sekunde gemacht werden. Zudem können auch Videos von 3D-Objekten mit bis zu 50 Bildern/Sekunde, also zeitlupenfähig aufgenommen werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher durch die Ansprüche definiert wird.

Bezugszeichenliste

| 1 | 3D-Scanvorrichtung |
| 10 | Bildaufnahmemodule |
| 12 | Boden-/Top-Platte des Bildaufnahmemoduls |
| 14 | Rahmen des Bildaufnahmemoduls |
| 16 | Blende des Bildaufnahmemoduls |
| 20 | Verbindungselement |
| 22 | Tür |
| 30 | Steuerungs- und Auswerteeinrichtung |
| 40 | Beleuchtungseinheit |
| 42 | Blitzlicht |
| 44 | Diffusor |
| 46 | Gehäuse |
| 50 | Scanbereich |
| 60 | Objektbereich |
| 70 | Objekt |
| | |
| 100 | Bildaufnahmevorrichtungen |
| 110 | horizontale Achse der optischen Sensoren |
| 120 | optische Sensoren |
| 130 | Stelleinrichtung |
| 132 | Übersetzungsgetriebe |
| 134 | Motor |
| 136 | Motorhalterung |
| 140 | Sensorcontroller |
| 150 | Halteplatte für optische Sensoren |
| 160 | Gehäuse der optischen Sensoren |
| 170 | Halterung der optischen Sensoren |
| 180 | Steuerungsbox |
| 182 | Modulsteuerungscontroller |
| 188 | Energieschnittstelle |
| 189 | Datenschnittstelle |
| | |
| 300 | Bildausgabevorrichtung |
| 320 | Touchscreen |
| 340 | Blende |
| 380 | Master-Steuerungsbox |
| 382 | Modulsteuerungscontroller |
| 384 | Master-Steuerungscontroller |
| 385 | Master-Speichereinheit |
| 386 | Grafikeinheit |
| 388 | Energieschnittstellen |
| 389 | Datenschnittstellen |
| | |
| a | erste Dimension des 3D-Scanners |
| b | zweite Dimension des 3D-Scanners |
| c | dritte Dimension des 3D-Scanners |
| | |
| d | erste Dimension der Bildaufnahmevorrichtung |
| e | zweite Dimension der Bildaufnahmevorrichtung |

f    dritte Dimension der Bildaufnahmevorrichtung


**Patentansprüche**

1.  3D-Scanvorrichtung (1) umfassend:

    - eine Mehrzahl von miteinander über Verbindungselemente (20) verbundene Bildaufnahmemodule (10), wobei die Verbindungselemente (20) zusammen mit den Bildaufnahmemodulen (10) einen Scanbereich (50) der 3D-Scanvorrichtung (1) umgeben,

    wobei jedes Bildaufnahmemodul (10) eine Mehrzahl von vertikal übereinander angeordneten Bildaufnahmevorrichtungen (100) umfasst,
    und wobei jede Bildaufnahmevorrichtung (100) umfasst:

    - mehrere auf einer horizontalen Achse (110) angeordnete optische Sensoren (120),
    - eine Stelleinrichtung (130), die dazu ausgebildet ist, den Neigungswinkel der optischen Sensoren (120) zu variieren, und
    - einen Sensorcontroller (140) ausgebildet zur Steuerung der Stelleinrichtung (130) und ausgebildet zur Einstellung und Auslösung der Bildaufnahme der optischen Sensoren (120); und

    - eine Steuerungs- und Auswerteeinrichtung (30) zur Steuerung und Auswertung der Bilder der Bildaufnahmevorrichtungen (100), wobei die Steuerungs- und Auswertvorrichtung (30) dazu eingerichtet ist, jede Bildaufnahmevorrichtung (100) separat und individuell anzusteuern und den Neigungswinkel ihrer optischen Sensoren (120) auszurichten **dadurch gekennzeichnet, dass**
    - die Steuerungs- und Auswerteeinrichtung (30) zum vertikalen Scannen eines Objektes durch sequentielles Ändern des Neigungswinkels der optischen Sensoren (120) der Bildaufnahmevorrichtungen (100) eingerichtet ist, und
    - die 3-D Scanvorrichtung für ein Aufnehmen von Bildern der Bildaufnahmevorrichtungen (100) für jeden geänderten Neigungswinkel eingerichtet ist, und
    - die Steuerungs- und Auswerteeinrichtung (30) zum Auswerten der Einzelbilder der Bildaufnahmevorrichtungen (100) zu einem Gesamtbild des Objektes mittels Photogrammetrie eingerichtet ist.

2.  3D-Scanvorrichtung (1) nach Anspruch 1, wobei der Sensorcontroller (140) einer Bildaufnahmevorrichtung (100) ein Einplatinencomputer ist.

3.  3D-Scanvorrichtung (1) nach einem der vorhergehenden Ansprüche, wobei die optischen Sensoren (120) der Bildaufnahmevorrichtungen (100) durch Paare von Stereokameras ausgebildet sind.

4.  3D-Scanvorrichtung (1) nach einem der vorhergehenden Ansprüche, wobei ferner eine Bildausgabevorrichtung (300) vorgesehen ist, die mit der Steuerungs- und Auswerteeinrichtung (30) verbunden ist.

5.  3D-Scanvorrichtung (1) nach einem der vorhergehenden Ansprüche, wobei ferner ein Touchscreen (320) zur Steuerung der 3D-Scanvorrichtung (1) vorgesehen ist, der mit der Steuerungs- und Auswerteeinrichtung (30) verbunden ist.

6.  3D-Scanvorrichtung (1) nach einem der vorhergehenden Ansprüche, wobei ein Bildaufnahmemodul (10) ferner eine Beleuchtungseinheit (40) zur Beleuchtung eines zu scannenden Objektes aufweist.

7.  3D-Scanvorrichtung (1) nach einem der vorhergehenden Ansprüche, wobei ein Bildaufnahmemodul (10) ferner eine Steuerungsbox (180) zur Steuerung der Bildaufnahmevorrichtungen (100) aufweist.

8.  3D-Scanvorrichtung (1) nach einem der vorhergehenden Ansprüche, wobei eine Steuerungs- und Auswerteeinrichtung (30) dazu ausgebildet ist, Bilddaten der Bildaufnahmevorrichtungen (100) zeitlich sequentiell von den jeweiligen Bildaufnahmevorrichtungen (100) zu empfangen.

9.  3D-Scanvorrichtung (1) nach einem der vorhergehenden Ansprüche, wobei ein Verbindungselement (20) die Steuerungs- und Auswerteeinrichtung (30) umfasst.

10. 3D-Scanvorrichtung (1) nach einem der vorhergehenden Ansprüche, wobei die Bildaufnahmevorrichtungen (100) in horizontal übereinander angeordneten Ebenen angebracht sind.

11. 3D-Scanvorrichtung (1) nach einem der vorhergehenden Ansprüche, wobei die horizontale Achse (110) der optischen Sensoren (120) um 90° drehbar ausgebildet ist.

12. 3D-Scanvorrichtung (1) nach einem der vorhergehenden Ansprüche, wobei die Steuerungs- und Auswerteeinrichtung (30) dazu eingerichtet ist, eine Überlappung der Bilder von unterschiedlichen Bildaufnahmevorrichtungen (100) durch Variation der Neigungswinkel der optischen Sensoren (120) zu variieren.

13. 3D-Scanvorrichtung (1) nach einem der vorhergehenden Ansprüche, wobei durch die Verbindung der Verbindungselemente (20) und der Bildaufnahmemodule (10) ein geschlossener Grundriss ausbildet wird.

14. 3D-Scanvorrichtung (1) nach Anspruch 13, wobei der geschlossene Grundriss die Form eines regelmäßigen Vielecks aufweist.

15. Verfahren zum dreidimensionalen Scannen von Objekten mit einer 3D-Scanvorrichtung (1) nach einem der vorhergehenden Ansprüche, **gekennzeichnet durch**

   - vertikales Scannen des Objektes durch sequentielles Ändern des Neigungswinkels der optischen Sensoren (120) der Bildaufnahmevorrichtungen (100), und Aufnehmen von Bildern durch die Bildaufnahmevorrichtungen (100) für jeden geänderten Neigungswinkel, und
   - Auswerten der Einzelbilder zu einem Gesamtbild des Objektes mittels Photogrammetrie.

16. Verfahren nach Anspruch 15, wobei die Bildaufnahmevorrichtungen (100) Stereokamerapaare umfassen und Bilder je Stereokamerapaar ausgewertet werden.

**Claims**

1. A 3D scanning device (1) comprising:

   - a plurality of image acquisition modules (10) connected to one another via connection elements (20), wherein the connection elements (20), together with the image acquisition modules (10), enclose a scanning region (50) of the 3D scanning device (1),

   wherein each image acquisition module (10) comprises a plurality of image acquisition devices (100) arranged vertically above one another,
   and wherein each image acquisition device (100) comprises:

   - multiple optical sensors (120) arranged on a horizontal axis (110),
   - an adjusting apparatus (130) which is configured to vary the angle of inclination of the optical sensors (120), and
   - a sensor controller (140) configured to control the adjusting apparatus (130) and configured to adjust and trigger the image acquisition of the optical sensors (120);
   and
   - a control and evaluation apparatus (30) for controlling and evaluating the images of the image acquisition devices (100), wherein the control and evaluation device (30) is set up to actuate each image acquisition device (100) separately and individually and to align the angle of inclination of its optical sensors (120), **characterized in that**
   - the control and evaluation apparatus (30) is set up to vertically scan an object by sequentially altering the angle of inclination of the optical sensors (120) of the image acquisition devices (100), and
   - the 3D scanning device is set up to acquire images of the image acquisition devices (100) for each altered angle of inclination, and
   - the control and evaluation apparatus (30) is set up to evaluate the individual images of the image acquisition devices (100) in order to form an overall image of the object by means of photogrammetry.

2. The 3D scanning device (1) according to Claim 1, wherein the sensor controller (140) of an image acquisition device (100) is a single-board computer.

3. The 3D scanning device (1) according to any one of the preceding claims, wherein the optical sensors (120) of the image acquisition devices (100) are configured by pairs of stereo cameras.

4. The 3D scanning device (1) according to any one of the preceding claims, wherein an image output device (300) is further provided, which is connected to the control and evaluation apparatus (30).

5. The 3D scanning device (1) according to any one of the preceding claims, wherein a touchscreen (320) for controlling the 3D scanning device (1) is further provided, which is connected to the control and evaluation apparatus (30).

6. The 3D scanning device (1) according to any one of the preceding claims, wherein an image acquisition module (10) further has an illumination unit (40) for illuminating an object to be scanned.

7. The 3D scanning device (1) according to any one of the preceding claims, wherein an image acquisition module (10) further has a control box (180) in order to control the image acquisition devices (100).

8. The 3D scanning device (1) according to any one of the preceding claims, wherein a control and evaluation apparatus (30) is configured to receive image data of the image acquisition devices (100) sequentially in time from the respective image acquisition devices (100).

9. The 3D scanning device (1) according to any one of the preceding claims, wherein a connection element (20) comprises the control and evaluation apparatus (30).

10. The 3D scanning device (1) according to any one of the preceding claims, wherein the image acquisition devices (100) are mounted in planes arranged horizontally above one another.

11. The 3D scanning device (1) according to any one of the preceding claims, wherein the horizontal axis (110) of the optical sensors (120) is configured to be rotatable about 90°.

12. The 3D scanning device (1) according to any one of the preceding claims, wherein the control and evaluation apparatus (30) is set up to vary an overlapping of the images of different image acquisition devices (100) by varying the angles of inclination of the optical sensors (120).

13. The 3D scanning device (1) according to any one of the preceding claims, wherein a closed outline is configured by the connection of the connection elements (20) and the image acquisition modules (10).

14. The 3D scanning device (1) according to Claim 13, wherein the closed outline has the form of a regular polygon.

15. A method for the three-dimensional scanning of objects with a 3D scanning device (1) according to any one of the preceding claims,
**characterized by**

- vertically scanning the object by sequentially altering the angle of inclination of the optical sensors (120) of the image acquisition devices (100), and acquiring images by the image acquisition devices (100) for each altered angle of inclination, and
- evaluating the individual images to form an overall image of the object by means of photogrammetry.

16. The method according to Claim 15, wherein the image acquisition devices (100) comprise pairs of stereo cameras and images are evaluated for each pair of stereo cameras.


**Revendications**

1. Dispositif scanner 3D (1) comprenant :

- une pluralité de modules d'acquisition d'images (10) reliés les uns aux autres par des éléments de raccordement (20), dans lequel les éléments de raccordement (20) associés aux modules d'acquisition d'images (10) entourent une zone de balayage (50) du dispositif scanner 3D (1),

dans lequel chaque module d'acquisition d'images (10) comprend de multiples dispositifs d'acquisition d'images (100) disposés verticalement en superposition,
et dans lequel chaque dispositif d'acquisition d'images (100) comprend :

- plusieurs capteurs optiques (120) disposés sur un axe horizontal (110),
- un actionneur (130), qui est conçu de manière à faire varier l'angle d'inclinaison des capteurs optiques (120), et
- un contrôleur de capteur (140) conçu pour commander l'actionneur (130) et conçu pour régler et déclencher l'acquisition d'images des capteurs optiques (120) ; et
- un dispositif d'analyse et de commande (30) servant à la commande et à l'analyse des images des dispositifs d'acquisition d'images (100), dans lequel le dispositif d'analyse et de commande (30) est agencé de manière à commander séparément et individuellement chaque dispositif d'acquisition d'images (100) et à aligner l'angle d'inclinaison de leurs capteurs optiques (120)
**caractérisé en ce que**
- le dispositif d'analyse et de commande (30) est agencé de manière à balayer verticalement un objet par le changement séquentiel de l'angle d'inclinaison des capteurs optiques (120) des dispositifs d'acquisition d'images (100), et
- le dispositif scanner 3D est agencé pour enregistrer les images des dispositifs d'acquisition d'images (100) pour chaque angle d'inclinaison modifié, et
- le dispositif d'analyse et de commande (30) est agencé de manière à analyser les images individuelles des dispositifs d'acquisition d'images (100) pour former une image globale de l'objet par photogrammétrie.

2. Dispositif scanner 3D (1) selon la revendication 1, le contrôleur de capteur (140) d'un dispositif d'acquisition d'images (100) étant un ordinateur monocarte.

3. Dispositif scanner 3D (1) selon l'une quelconque des revendications précédentes, les capteurs optiques (120) des dispositifs d'acquisition d'images (100) étant constitués par des paires de caméras stéréoscopiques.

4. Dispositif scanner 3D (1) selon l'une quelconque des revendications précédentes, un dispositif de sortie d'images (300) étant encore prévu, qui est relié au dispositif d'analyse et de commande (30).

5. Dispositif scanner 3D (1) selon l'une quelconque des revendications précédentes, un écran tactile (320) étant encore prévu pour commander le dispositif scanner 3D (1), qui est relié au dispositif d'analyse et de commande (30).

6. Dispositif scanner 3D (1) selon l'une quelconque des revendications précédentes, un module d'acquisition d'images (10) présentant encore une unité d'éclairage (40) servant à éclairer un objet à scanner.

7. Dispositif scanner 3D (1) selon l'une quelconque des revendications précédentes, un module d'acquisition d'images (10) présentant encore un boîtier de commande (180) servant à commander les dispositifs d'acquisition d'images (100).

8. Dispositif scanner 3D (1) selon l'une quelconque des revendications précédentes, un dispositif d'analyse et de commande (30) étant conçu de manière à recevoir des données d'images des dispositifs d'acquisition d'images (100) dans le temps de manière séquentielle en provenance des dispositifs d'acquisition d'images respectifs (100).

9. Dispositif scanner 3D (1) selon l'une des revendications précédentes, un élément de raccordement (20) comprenant le dispositif d'analyse et de commande (30).

10. Dispositif scanner 3D (1) selon l'une quelconque des revendications précédentes, les dispositifs d'acquisition d'images (100) étant montés à des niveaux disposés horizontalement en superposition.

11. Dispositif scanner 3D (1) selon l'une quelconque des revendications précédentes, l'axe horizontal (110) des capteurs optiques (120) étant conçu de manière à pouvoir pivoter de 90°.

12. Dispositif scanner 3D (1) selon l'une quelconque des revendications précédentes, le dispositif d'analyse et de commande (30) étant agencé de manière à changer un chevauchement des images de différents dispositifs d'acquisition d'images (100) par la variation de l'angle d'inclinaison des capteurs optiques (120).

13. Dispositif scanner 3D (1) selon l'une quelconque des revendications précédentes, un plan fermé étant formé par la liaison des éléments de raccordement (20) et des modules d'acquisition d'images (10).

14. Dispositif scanner 3D (1) selon la revendication 13, le plan fermé présentant la forme d'un polygone régulier.

15. Procédé de balayage tridimensionnel d'objets avec un dispositif scanner 3D (1) selon l'une quelconque des revendications précédentes,
    **caractérisé par**

    - le balayage vertical de l'objet moyennant le changement séquentiel de l'angle d'inclinaison des capteurs optiques (120) des dispositifs d'acquisition d'images (100), et l'enregistrement d'images moyennant les dispositifs d'acquisition d'images (100) pour chaque angle d'inclinaison modifié, et
    - l'analyse les diverses images pour former une image globale de l'objet par photogrammétrie.

16. Procédé selon la revendication 15, les dispositifs d'acquisition d'images (100) comprenant des paires de caméras stéréoscopiques et les images étant analysées par paire de caméras stéréoscopiques.

Fig. 1

1

b

100

10

50

20

$\left.\begin{array}{l}300, \\ 320 \\ 380\end{array}\right\}$ 30

22

a

c

EP 3 318 838 B1

Fig. 2

<u>10</u>

12

40

100

180

16

14

17

Fig. 3

20

40

100

300,
320

380

30

340

Fig. 4

Fig. 5

180

188

189

182

Fig. 6

100

160

d

170

120

EP 3 318 838 B1

Fig. 7

100

160

120

132
134  } 130
136

150

140

22

Fig. 8    <u>40</u>

44

42

46

46

Fig. 9

Fig. 10

100, 120

100, 120

100, 120

100, 120

70

$I_n$

$I_3$

$I_2$

$I_1$

$I_{PO}$

$I_{Obj}$

$I_{Off}$

Fig. 11

# Fig.12

EP 3 318 838 B1

Fig. 13a

100, 120

70

Fig. 13b

100, 120

70

Fig. 13c

100, 120

70

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2535741 A, Laser und Kamera
- US 20150304629 A1